# EUROPÄISCHE PATENTANMELDUNG

(11) **EP 2 617 748 A1**
(43) Veröffentlichungstag der Anmeldung: **24.07.2013**
(21) Anmeldenummer: 12152140.5
(22) Anmeldetag: 23.01.2012
(51) Int. Cl.: C08G 18/00, C08G 65/00, C08J 9/00

(54) **Polyetherester-Polyole und Verfahren zu deren Herstellung**

(71) Anmelder: BASF SE, 67056 Ludwigshafen (DE)
(72) Erfinder: Die Erfindernennung liegt noch nicht vor

(57) **Zusammenfassung**

Die vorliegende Erfindung betrifft neuartige Polyetherester-Polyole sowie ein Verfahren zu deren Herstellung.

## Beschreibung

Die vorliegende Erfindung betrifft neuartige Polyetherester-Polyole sowie ein Verfahren zu deren Herstellung.

Als Polyetherester-Polyole werden solche Polyol-Typen bezeichnet, bei denen sowohl Polyether-Einheiten als auch Polyestereinheiten in einer Molekülkette vorhanden sind. Sie werden unter anderem als Rohstoff für die Herstellung von Polyurethan-Materialien verwendet. Grundsätzlich sind verschiedene Verfahren bekannt, Polyetherester-Polyolen zu erhalten. Im Folgenden seien einige relevante Dokumente zitiert:
US 6 753 402 beschreibt die katalytische Anlagerung von Alkylenoxiden an Polyester unter Verwendung von DMC-Katalysatoren.

US 5 319 006, US 5 436 313 sowie US 5 696 225 beschreiben die Polykondensation von Polyethern mit Dicarbonsäuren oder Dicarbonsäureanhydriden unter Verwendung von Polykondensationskatalysatoren.

US 6 569 352 beschreibt ein zweistufiges Verfahren, bei dem zunächst Polyole mit zyklischen Anhydriden zur Reaktion gebracht werden und in einem weiteren Schritt die Anlagerung der Alkylenoxide erfolgt.

In den Dokumenten US 20070265367, US 5 032 671 sowie im Journal of Applied Polymer Science, Jahrgang 2007, Ausgabe 103, Seite 417-424 wird die direkte Copolymerisation von zyklischen Anhydriden bzw. zyklischen Estern mit Alkylenoxid und Alkoholen als Initiatoren beschrieben.

US 20060211830 beschreibt ein zweistufiges Verfahren, bei dem zunächst ein hydroxygruppenhaltiger Carbonsäureester mit Alkylenoxid zur Reaktion gebracht wird. Das Reaktionssprodukt wird anschließend in Gegenwart eines Umesterungskatalysators kondensiert.

EP 1 923 417 B1 beschreibt die Umsetzung H-funktioneller Verbindungen mit Alkylenoxiden in Gegenwart von Fettsäureestern unter zur Hilfenahme von basischen Katalysatoren. Hierbei wird im Prozess simultan alkoxiliert und umgeestert, so dass angeblich homogene Polyetherester resultieren.

Auch wenn die Verwendung von Fettsäureestern oder Carbonsäuren oder Carbonsäureestern oder Carbonsäureanhydride als Rohstoff für die Herstellung von Polyetherester-Polyolen in den oben zitierten Dokumenten beschrieben wurde, beschreibt jedoch keines der Dokumente, dass sich im Falle der basenkatalysierten Ringöffnungspolymerisation von Alkylenoxiden neben Fettsäureestern weitere ester- oder säureanhydrid-funktionelle Moleküle einsetzen lassen. Dies jedoch ermöglicht den Zugang zu neuartigen Polyetherester-Strukturen, die durch die Wahl der funktionellen Moleküle noch weiter modifiziert und an die jeweiligen Anwendungsgebiete beispielsweise im Polyurethan angepasst werden können.

Bei zahlreichen Anwendungen, zum Beispiel bei Polyurethanen, die aus Polyolen, wie Polyetheresterpolyolen, hergestellt werden können, sind hydrophobe Eigenschaften erwünscht. Diese führen in der Regel zu einer verringerten Wasseraufnahme und einer verbesserten Hydrolysebeständigkeit, also zu einem verbesserten Alterungsverhalten des Polyurethans. Zudem können hydrophob modifizierte Polyurethane eine veränderte Oberflächenstruktur aufweisen, was sich z. B. in einer verbesserten Rutschfestigkeit oder in einem angenehmeren Gefühl beim Anfassen (verbesserte Haptik) äußern kann. Ein klarer Vorteil bietet eine verringerte Wasseraufnahme in Beschichtungen, Klebstoffen, Dichtungen und Elastomeren (im Allgemeinen bei "CASE"-Anwendungen - Coatings, Adhesives, Sealants, Elastomers-Anwendungen). In diesen Anwendungen wird oft die maximale Wasseraufnahme des Polyurethans unter bestimmten Testbedingungen festgelegt, denn es ist bekannt, dass Polyurethane mit einer geringeren Wasseraufnahme in diesen Anwendungen meist verbesserte Eigenschaften aufweisen. In mit Kohlenwasserstoffen getriebenen Polyurethan-Hartschaum-Formulierungen sind hydrophobe Polyole erwünscht, da diese die Verträglichkeit zwischen der Polyolkomponente, dem Treibmittel sowie der Isocyanatkomponente verbessern, wodurch auch bei einem vergleichsweise hohen Anteil an aliphatischen oder zykloaliphatischen Treibmitteln (n-Pentan oder Cyclopentan) homogene Polyolkomponenten resultiert.

Die bisher vorhandene Literatur auf dem Gebiet der Herstellung von Polyetheresterpolyolen, wie sie zum Beispiel in den oben genannten Dokumenten verkörpert ist, bietet jedoch bisher keine befriedigende Lösung des Problems, wie Polyetheresterpolyole mit hydrophoben Eigenschaften für einen breiten Anwendungsbereich hergestellt werden können. Zudem benötigen die bisher bekannten Verfahren zur Herstellung von Polyether-Esterpolyolen in der Regel einen hohen Energieeintrag und sind oft sehr aufwendig, z. B. weil bei der Reaktion entstehendes Wasser abgeführt werden muss (Stripping).

Es stellte sich also die Aufgabe, ein einfach durchzuführendes, möglichst energieeffizientes Verfahren zur Herstellung von Polyetherester-Polyolen mit hydrophoben Eigenschaften für einen breiten Anwendungsbereich bereitzustellen. Das Verfahren sollte dabei möglichst einheitliche und homogene Polyetherester-Polyole liefern, die für Polyurethan (PU)-Anwendungen geeignet sein sollten. Es sollte möglich sein, preisgünstige Rohstoffe einzusetzen.

Gegenstand der Erfindung ist somit ein Verfahren zur Herstellung eines Polyetherester-Polyols, wobei ein Gemisch (A) aus mindestens einer Zerewitinoff-aktiven Verbindung i), mindestens einer Verbindung ii), ausgewählt aus der Gruppe enthaltend zyklische Anhydride von Dicarbonsäuren, mindestens einer Fettsäure iiia) und/ oder derem Ester iiib) sowie optional mindestens einer Verbindung iv), ausgewählt aus der Gruppe enthaltend zyklische Mono- und Diester, mit Hilfe eines nucleophilen und/ oder basischen Katalysators mit mindestens einem Alkylenoxid v) zur Reaktion gebracht wird.

Weitere Gegenstände der vorliegenden Erfindung sind auch ein Polyetherester-Polyol, herstellbar nach dem erfindungsgemäßen Verfahren, sowie die Verwendung eines nach dem erfindungsgemäßen Verfahren herstellbaren Polyetherester-Polyols zur Herstellung von geschäumten und/ oder kompakten Polyurethanen durch Reaktion mit einem Di- oder Polyisocyanat, sowie die Verwendung eines nach dem erfindungsgemäßen Verfahren herstellbaren Polyetherester-Polyols zur Herstellung von Polyisocyanurat-Schäumen, und die Verwendung eines nach dem erfindungsgemäßen Verfahren herstellbaren Polyetherester-Polyols zur Herstellung von kompakten Polyurethanen aus dem Bereich Beschichtungen oder Klebstoffe.

In einer bevorzugten Ausführungsform der Erfindung wird das Gemisch (A) zusammen mit dem nucleophilen und/ oder basischen Katalysator vor Zugabe des mindestens einen Alkylenoxids iv) im Reaktionsgefäß vorgelegt.

In einer bevorzugten Ausführungsform der Erfindung ist die Zerewitinoff-aktive Verbindung i) ausgewählt aus der Gruppe der hydroxy- und/oder aminofunktionellen Verbindungen mit einer Funktionalität im Bereich zwischen 1 und 8.

Die Zerewitinoff-aktive Verbindung i) ist in einer weiteren bevorzugten Ausführungsform ausgewählt aus der Gruppe der üblicherweise verwendeten Polyalkohole oder Mono- sowie Polyamine mit Funktionalitäten im Bereich zwischen 2 bis 8 bzw. deren Umsetzungsprodukten mit Alkylenoxiden wie Propylenoxid oder Ethylenoxid sowie Mischungen hieraus. Beispielhaft erwähnt seien an dieser Stelle Wasser, Propylenglykol, Ethylenglykol, Diethylenglykol, Dipropylenglykol, Neopentylglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythritol, Sorbitol, Saccharose, Hydrochinon, Pyrocatechol, Resorcinol, Bisphenol A, Bisphenol F, 1,3,5-Trihydroxybenzol, Kondensationsprodukte von Formaldehyd mit Phenol oder Melamin oder Harnstoff, die Methylolgruppen tragen, Harnstoff, Biuret, Mannichbasen, Stärke oder Stärkederivate, Ammoniak, Ethanolamin, Diethanolamin, Triethanolamin, Isopropanolamin, Diisopropanolamin, Triisopropanolamin, Ethylendiamin, Hexamethylendiamin, Anilin, alle Isomere von Diaminobenzol, Diaminotoluol sowie Diaminodiphenylmethan.

Bevorzugt ist die Zerewitinoff-aktive Verbindung ausgewählt aus der Gruppe enthaltend Glycerin, Propylenglykol, Dipropylenglykol, Ethylenglykol, Diethylenglykol, Neopentylglykol, Trimethylolpropan, Saccharose, Sorbitol, Pentaerythritol und Bisphenol A, sowie Mischungen daraus.

In einer Ausführungsform des erfindungsgemäßen Verfahrens ist das zyklische Anhydrid ii) einer Dicarbonsäure ausgewählt aus der Gruppe enthaltend a) Alkenylbernsteinsäureanhydride, b) Phthalsäureanhydrid, c) Maleinsäureanhydrid, d) Bernsteinsäureanhydrid sowie e) Tetrahydrophthalsäureanhydrid und Mischungen daraus.

Die Alkenylbernsteinsäureanhydride a) sind dabei bevorzugt ausgewählt aus der Gruppe der C12-C20-alkylkettensubstituierten Bernsteinsäureanhydride und der Poly(isobutylen)bernsteinsäureanhydride mit Molekulargewicht zwischen 500 und 2000 g/mol. Das mindestens eine Alkenylbernsteinsäureanhydrid a) ist in einer Ausführungsform des erfindungsgemäßen Verfahrens bevorzugt ausgewählt aus der Gruppe enthaltend C18- und/oder C16-Alkenylbernsteinsäureanhydride, Poly(isobutylen)bernsteinsäureanhydrid und Mischungen hieraus.

Das zyklische Anhydrid ii) einer Dicarbonsäure kann in einer Ausführungsform auch Itaconsäure sein.

In einer Ausführungsform des erfindungsgemäßen Verfahrens ist das mindestens eine Alkylenoxid v) ausgewählt aus der Gruppe enthaltend Propylenoxid, Ethylenoxid, 1,2-Butylenoxid, 2,3-Butylenoxid, 1,2-Pentenoxid, Octen-1-oxid, Decen-1-oxid, Dodecen-1-oxid, Tetradecen-1-oxid, Hexadecen-1-oxid, Octadecen-1-oxid, Styroloxid, Cyclohexenoxid, Epoxypropylneododecanoat, Glycidol, Epichlorhydrin und Mischungen hieraus.

Bevorzugt ist das Alkylenoxid v) ausgewählt aus der Gruppe 1,2-Butylenoxid, Propylenoxid, Ethylenoxid.

In einer Ausführungsform des erfindungsgemäßen Verfahrens ist die Fettsäure iiia) ausgewählt aus der Gruppe enthaltend hydroxylgruppenhaltige Fettsäuren, hydroxylgruppenmodifizierte Fettsäuren sowie Fettsäuren, die keine Hydroxylgruppen enthalten, und Mischungen daraus.

In einer weiteren Ausführungsform des erfindungsgemäßen Verfahrens ist die Fettsäure iiia) ausgewählt aus der Gruppe enthaltend gesättigte und ungesättigte Fettsäuren, sowie Mischungen daraus.

Die Fettsäure iiia) ist in einer weiteren Ausführungsform ausgewählt aus der Gruppe enthaltend gesättigte, einfach ungesättigte, zweifach ungesättigte und dreifach ungesättigte Fettsäuren, nicht-Hydroxygruppen enthaltende Fettsäuren, hydroxygruppenhaltige Fettsäuren sowie mit Hydroxylgruppen modifizierte Fettsäuren. Bevorzugt ist die Fettsäure iiia) ausgewählt aus der Gruppe enthaltend Buttersäure, Capronsäure, Caprylsäure, Caprinsäure, Laurinsäure, Myristinsäure, Palmitinsäure, Stearinsäure, Ölsäure, Rizinolsäure, Linolsäure, Linolensäure, Arachidonsäure, Eicosapentaensäure, Docosahexaensäure, hydroxygruppenmodifizierte Ölsäure, hydroxygruppenmodifizierte Linolsäure, hydroxygruppenmodifizierte Linolensäure und hydroxygruppenmodifizierte Rizinolsäure.

Der Begriff "Fettsäureester" im Sinne der Komponente iiib) der vorliegenden Erfindung bezieht sich auf Mono-, Di-, Triester oder Polyester von Fettsäuren; die genannten Triester von Fettsäuren werden auch als Triglyceride bezeichnet. Triglyceride sind Hauptbestandteile von natürlichen Fetten oder Ölen, die sowohl pflanzlichen als auch tierischen Ursprungs sein können. Bei den Polyester von Fettsäuren handelt es sich im Sinne der Erfindung um mit Fettsäuren mehrfach veresterte Polyalkohole.

Somit ist der Fettsäureester iiib) ausgewählt aus der Gruppe enthaltend Fettsäuretriglyceride, Fettsäurealkylester mit und ohne Hydroxyfunktionalitäten.

In einer Ausführungsform ist der Fettsäureester iiib) ausgewählt aus der Gruppe enthaltend hydroxylgruppenhaltige Fettsäureester, hydroxylgruppenmodifizierte Fettsäureester sowie Fettsäureester, die keine Hydroxylgruppen enthalten, und Mischungen daraus.

Als hydroxygruppenhaltige Fettsäureester können beispielsweise Rizinolsäureester oder auch Mono- oder Polyfettsäureester von mehrfunktionellen Alkoholen, beispielsweise von Oligo- oder Polysacchariden eingesetzt werden.

In einer Ausführungsform der Erfindung ist der Fettsäureester iiib) ausgewählt aus der Gruppe enthaltend Kakaobutter, Kokosfett, Baumwollsaatöl, Erdnussöl, Haselnussöl, Walnussöl, Leinöl, Distelöl, Meerestierfett (Tran), Schweineschmalz, Rindertalg, Gänseschmalz, Butterfett, Rizinusöl, Sojaöl, Rapsöl, Olivenöl, Sonnenblumenöl, Palmöl, Traubenkernöl, schwarzem Kümmelöl, Kürbiskernöl, Maiskeimöl, Weizenkeimöl, Mandelöl, Pistazienöl, Aprikosenkernöl, Macadamianussöl, Avocadoöl, Sanddornöl, Sesamöl, Hanföl, Primelöl, Wildrosenöl, hydroxylgruppenmodifiziertes Sojaöl, hydroxylgruppenmodifiziertes Rapsöl, hydroxylgruppenmodifiziertes Olivenöl, hydroxylgruppenmodifiziertes Sonnenblumenöl und derivatisiertes Rizinusöl.

In einer bevorzugten Ausführungsform ist der Fettsäureester iiib) ausgewählt aus der Gruppe enthaltend Tran, Talg, Rizinusöl, Sojaöl, Rapsöl, Olivenöl, Sonnenblumenöl, hydroxylgruppen-modifiziertes Sojaöl, hydroxylgruppenmodifiziertes Rapsöl, hydroxylgruppenmodifiziertes Olivenöl, hydroxylgruppenmodifiziertes Sonnenblumenöl und derivatisiertes Rizinusöl, Palmöl, hydroxylgruppenmodifiziertes Palmöl, sowie Mischungen daraus

Bevorzugt ist der Fettsäureester iiib) in einer Ausführungsform ausgewählt aus der Gruppe Rizinusöl, Sojaöl, Palmöl, Rapsöl, Sonnenblumenöl, mit Hydroxylgruppen modifizierte Öle, ungesättigte und/oder gesättigte C4-C22-Fettsäurealkylester wie beispielsweise Stearinsäurealkylester, Ölsäurealkylester, Linolsäurealkylester, Linolensäurealkylester, Rizinolsäurealkylester oder Mischungen hieraus. Ganz besonders bevorzugt ist der Fettsäureester iiib) ausgewählt aus der Gruppe Rizinusöl, Sojaöl, Rapsöl, Sonnenblumenöl, Palmöl hydroxylgruppen-modifiziertes Sojaöl, hydroxylgruppen-modifiziertes Sonnenblumenöl, hydroxylgruppen-modifiziertes Palmöl, hydroxylgruppen-modifiziertes Rapsöl und Methyl- und/oder Ethylester der bevorzugt genannten Fettsäureester.

Die Einführung der Hydroxygruppen in den hydroxylgruppenmodifizierten Ölen oder den hydroxygruppenmodifizierten Fettsäuren kann über die allgemein bekannten Verfahren wie zum Beispiel über Hydroformylierung/ Hydrierung oder Epoxidierung/Ringöffnung oder Ozonolyse, Direktoxidation, Lachgasoxidation/ Reduktion erfolgen.

In einer Ausführungsform des erfindungsgemäßen Verfahrens ist die Verbindung iv) nicht vorhanden.

In einer weiteren Ausführungsform des erfindungsgemäßen Verfahrens ist mindestens eine Verbindung iv) vorhanden.

Dabei ist die Verbindung iv) bevorzugt ausgewählt aus der Gruppe enthaltend γ-Butyrolacton, δ-Valerolacton, ε-Caprolacton, (R,R)-Lactid, (S,S)-Lactid, meso-Lactid, sowie Mischungen daraus; besonders bevorzugt ist als Verbindung iv) ε-Caprolacton.

Der basische und/oder nucleophile Katalysator kann ausgewählt sein aus der Gruppe Alkalimetall- oder Erdalkalimetallhydroxide, Alkalimetall- oder Erdalkalimetallalkoxide, tertiäre Amine, N-heterocyclische Carbene.

Bevorzugt ist der basische und/oder nucleophile Katalysator ausgewählt ist aus der Gruppe enthaltend tertiäre Amine.

Besonders bevorzugt ist der basische und/oder nucleophile Katalysator ausgewählt aus der Gruppe enthaltend Imidazol und Imidazolderivate, ganz besonders bevorzugt Imidazol.

In einer anderen bevorzugten Ausführungsform ist der basische und/oder nucleophile Katalysator ausgewählt aus der Gruppe enthaltend N-heterocyclische Carbene, besonders bevorzugt aus der Gruppe enthaltend N-heterozyklische Carbene auf Basis N-alkyl- und N-arylsubstituierter Imidazolylidene.

In einer bevorzugten Ausführungsform ist der basische und/oder nucleophile Katalysator ausgewählt aus der Gruppe umfassend Trimethylamin, Triethylamin, Tripropylamin, Tributylamin, N,N'-Dimethylethanolamin, N,N'-Dimethylcyclohexylamin, Dimethylethylamin, Dimethylbutylamin, N,N'-Dimethylanilin, 4-Dimethylaminopyridin, N,N'-Dimethylbenzylamin, Pyridin, Imidazol, N-Methylimidazol, 2-Methylimidazol, 4-Methylimidazol, 5-Methylimidazol, 2-Ethyl-4-methylimidazol, 2,4-Dimethylimidazol, 1-Hydroxypropylimidazol, 2,4,5-Trimethylimidazol, 2-ethylimidazol, 2-Ethyl-4-methylimidazol, N-Phenylimidazol, 2-Phenylimidazol, 4-Phenylimidazol, Guanidin, alkylierte Guanidine, 1,1,3,3-Tetramethylguanidin, 7-Methyl-1,5,7-triazabicyclo[4.4.0]dec-5-en, 1,5-Diazobicylco[4.3.0]-non-5-en, 1,5-Diazabicylo[5.4.0]undec-7-en, bevorzugt Imidazol und Dimethylethanolamin (DMEOA).

Die genannten Katalysatoren können allein oder in beliebigen Mischungen zueinander eingesetzt werden.

Das Verfahren zur Herstellung der Polyetherester-Polyole wird vorzugsweise so ausgeführt, dass die Zerewitinoff-aktive Verbindung zusammen mit dem Dicarbonsäureanhydrid ii) sowie der Fettsäure iiia) und/ oder dem Fettsäureester iiib) und dem basischen Katalysator in einen Reaktor vorgelegt wird und das Alkylenoxid kontinuierlich in den Reaktor zudosiert wird. In einer weiteren Ausführungsform der Erfindung wird die Zerewitinoff-aktive Verbindung i) und/oder das Dicarbonsäureanhydrid ii) und/oder der Fettsäureester iiib) und/oder die Fettsäure iiia) ebenfalls in den Reaktor zusammen mit dem Alkylenoxid kontinuierlich zudosiert. In einer weiteren Ausführungsform werden alle Komponenten gleichzeitig oder nacheinander während der Synthese zudosiert und das Reaktionsprodukt kontinuierlich entnommen, so dass der ganze Prozess vollkontinuierlich durchgeführt werden kann.

Die Umsetzung mit Alkylenoxid erfolgt üblicherweise bei Temperaturen im Bereich zwischen 80 und 200°C, vorzugsweise zwischen 100°C und 160°C, besonders bevorzugt zwischen 110°C und 140°C.

Wenn tertiäre Amine und/ oder N-heterozyklische Carbene als Katalysatoren für die Umsetzung mit Alkylenoxiden verwendet werden, liegt die Katalysatorkonzentration bezogen auf die Masse des Endproduktes zwischen 50 - 5000 ppm, bevorzugt zwischen 100 und 1000 ppm, und der Katalysator muss nach der Umsetzung nicht aus dem Reaktionsprodukt entfernt werden.

In einer bevorzugten Ausführungsform ist die Zerewitinoff-aktive Verbindung i) ausgewählt aus der Gruppe Trimethylolpropan, Glycerin, Neopentylglykol, Bisphenol A und das zyklische Anhydrid einer Carbonsäure ii) ist ausgewählt aus der Gruppe der C18- und/oder C16-Alkenylbernsteinsäureanhydride und der Fettsäureester iiib) ist ausgewählt aus der Gruppe Rizinusöl, Sojaöl, Palmöl und das Alkylenoxid v) ist Propylenoxid und der basische und/oder nucleophile Katalysator ist ausgewählt aus der Gruppe Dimethylethanolamin (DMEOA) und Imidazol.

In einer weiteren bevorzugten Ausführungsform ist die Zerewitinoff-aktive Verbindung i) ausgewählt aus der Gruppe Ethylenglykol, Diethylenglykol, Propylenglykol, Dipropylenglykol, Glycerin und Trimethylolpropan und das zyklische Anhydrid einer Carbonsäure ii) ist Phthalsäureanhydrid und die Fettsäure iiia) ist ausgewählt aus der Gruppe Ölsäure, Stearinsäure, Linolsäure, Linolensäure oder Mischungen hieraus und der Fettsäureester iiib) ist ausgewählt aus der Gruppe Rizinusöl, Sojaöl, Palmöl und Talg und das Alkylenoxid v) ist Propylenoxid oder Ethylenoxid oder Mischungen hieraus und der basische und/oder nucleophile Katalysator ist ausgewählt aus der Gruppe Dimethylethanolamin (DMEOA) und Imidazol.

Die erfindungsgemäßen Polyetherester-Polyole werden mittels Ringöffnungspolymerisation von Alkylenoxiden hergestellt. Sie sind Telechele und haben ein gut definiertes Molekulargewicht und Funktionalität. Die Funktionalität liegt in der Regel im Bereich zwischen 1-8, bevorzugt zwischen 2-6, besonders bevorzugt zwischen 2-4, bei OH-Zahlen im Bereich zwischen 20 und 1000 mg KOH/g, bevorzugt zwischen 20 und 800 mg KOH/g, besonders bevorzugt zwischen 100 und 600 mg KOH/g.

Die erfindungsgemäßen Polyetherester-Polyole enthalten je nach Verwendungszweck bevorzugt zwischen 5 Massen-% und 90 Massen-% von Fettsäuren iiia) und/oder Fettsäureester iiib) abgeleitete Einheiten, bevorzugt 5 bis 80 Massenprozent.

Die erfindungsgemäßen Polyetherester-Polyole enthalten je nach Verwendungszweck bevorzugt zwischen 5 Massen-% und 80 Massen-% von Verbindung ii) abgeleitete Einheiten.

Die verwendeten basischen und/ oder nucleophilen Katalysatoren können neben der Ringöffnungspolymerisation zusätzlich noch die Umesterung der anhydrid-funktionellen Moleküle katalysieren, wodurch einheitliche Reaktionsprodukte entstehen. Die Produkteigenschaften sind nicht mehr stark von Prozessparameter beeinflusst und die Produkte lassen sich besser reproduzieren.

Ein Vorteil des erfindungsgemäßen Verfahrens besteht darin, dass sich auch solche Verbindungen zu einem homogenen Reaktionsprodukt umsetzen lassen, die sich durch einen sehr großen Polaritätsunterschied auszeichnen und somit in reiner Form miteinander unverträglich sind. Durch die Umsetzung mit Alkylenoxid werden die miteinander unverträglichen Moleküle kompatibilisiert und es resultieren homogene Reaktionsprodukte, die sowohl Polyethereinheiten als auch Polyestereinheiten beinhalten. Bei der basenkatalysierten Alkoxilierung ist dies vermutlich auch, wie bereits erwähnt, darauf zurückzuführen, dass im Prozess neben der Ringöffnungspolymerisation zeitgleich Umesterungsreaktionen stattfinden, die die homogene Verteilung der estertragenden Molekülketten mit den ethertragenden Molekülketten gewährleistet.

Zudem bietet das erfindungsgemäß Verfahren der Vorteil, dass es bei niedrigeren Temperaturen durchgeführt werden kann als vergleichbare klassische Verfahren (und somit energiesparend ist), und dass es sowohl zeiteffizienter ist als auch eine höhere Ausbeute liefert.

Die Verwendungsmöglichkeit der erfindungsgemäßen Polyethesterole für Polyurethan (PU)-bauteile ist sehr vielfältig. Sie können beispielsweise in geschäumten oder in kompakten PU-Materialien wie beispielsweise in Verpackungsschaumstoffen, Weichschaumstoffen, Hartschaumstoffen, Halbhartschaumstoffen, Teppichbodenschaumstoffen, Integralschaumstoffen, Schuhsohlen, Kfz-Stoßfänger und andere Kfz-Außenteilen, Kunstleder, Beschichtungen, Klebstoffen, Dichtungsmaterialien oder in Elastomeren eingesetzt werden.

In dem Hydroxywertbereich, in dem die Polyole der Erfindung hergestellt können werden, sind diese Polyole, soweit sie im Polyurethansystem als Hauptpolyol verwendet werden, eher für härtere Polyurethane geeignet, so wie Hartschaum, Beschichtungen, Klebstoffe und Dichtungsmaterialien.

Hartschaumstoffe, wie oben erwähnt, können Polyurethan- und Polyisocyanuratschaumstoffe sein. Die Polyole der Erfindung weisen zusätzliche Vorteile auf, wenn Alkane, z.B. Pentan, als Treibmittel eingesetzt werden; der Einbau von hydrophoben ölbasierten Seitenketten durch die Verwendung von Triglyzeriden und Anhydriden, die eine hydrophobe Seitenkette enthalten, erhöht die Pentanverträglichkeit des Systems. Auch können aromatische Strukturen, z.B. durch Verwendung von Phthalsäureanhydrid, eingebaut werden, was die Brandwidrigkeit des Schaums erhöht.

Die Estergruppen, die durch Verwendung der Triglyzeride und Anhydride in der Synthese in den Polyolen eingeführt werden, werden auch zusätzlich die Brandwidrigkeit erhöhen. Somit sind die Polyole der Erfindung besonders gut geeignet für die Anwendungen im Hartschaumstoffbereich.

Im Bereich Beschichtungen, Klebstoffe und Dichtungsmaterialien führt der Einbau von hydrophoben ölbasierten Seitenketten und Anhydriden, die eine hydrophobe Seitenkette enthalten, zu einer erhöhten Hydrophobizität. Die erhöhte Hydrophobizität hat Vorteile sowohl in der Herstellung als auch in den Eigenschaften des Polyurethans. In der Herstellung des Polyurethans in obengenannten Anwendungen kann eine lange (offene) Verarbeitungszeit erwünscht sein. Eine erhöhte Hydrophobizität des Polyurethangemisches reduziert die Feuchtaufnahme während der Reaktion, wodurch das System eine längere Verarbeitungszeit bekommt und die Blasenbildung reduziert wird. In den Endeigenschaften des ausreagierten Polyurethans führt eine erhöhte Hydrophobizität zu einer erhöhten Wasserabweisung. So kann die Aufnahme von Wasser die Härte des Polyurethans und die Anbindung des Polyurethans an Substrate reduzieren. In Ummantelungen von elektronischen Bauteilen ist ebenfalls ein Polyurethan mit geringerer Wasseraufnahme erwünscht, weil die Aufnahme von Wasser zu einer Erhöhung der dielektrischen Konstante und Erniedrigung des spezifischen Durchgangswiderstands führt. Auch sind hydrophobe Polyurethane weniger anfällig für Hydrolyse und in Folge dessen werden die Eigenschaften des Polyurethans länger erhalten.

Die erfindungsgemäßen Polyole können für die Herstellung von Präpolymeren durch Umsetzung mit Diisocyanaten verwendet werden. Somit können die erfindungsgemäßen Polyole für die Herstellung von Polyurethanmaterialien neben der direkten Verwendung in der Polyol-Komponente der Formulierungen auch in Form eines Präpolymers verwendet werden. In diesem Zuge ist zu erwähnen, dass der Präpolymeranteil in der Präpolymer-Polyol-Mischung zwischen 10% bis 90% betragen kann. Diese Präpolymer-Polyol-Mischungen werden beispielsweise verwendet, wenn die erfindungsgemäßen Polyole in so genannten Einkomponentenfeuchtaushärtenden Systemen wie z. B. für Beschichtungs-, Klebe- und Dichtungsmaterialien eingesetzt werden.

Je nachdem, welche Einsatzstoffe eingesetzt werden, können Produkte für verschiedenste Anwendungsbereiche hergestellt werden. Sind beispielsweise Polyole für Polyurethan-Beschichtungen oder für Polyurethan-Hartschaumstoffe bereitzustellen, wird bevorzugt als Komponente ii) ein Alkenylbernsteinsäureanhydrid verwendet und als Komponente iiib) ein Fettsäuretriglycerid wie Rizinusöl.

Für Polyisocyanurat-Polyurethan-Hartschaumstoffe ist Komponente ii) bevorzugt Phthalsäureanhydrid und Komponente iiib) bevorzugt Sojaöl oder Ölsäuremethylester.

Die nach dem erfindungsgemäßen Verfahren hergestellten Polyetherester-Polyole können aufgrund der hydrophoben Komponenten, die entweder über den Fettsäureester iiib) oder über die Anhydridkomponente ii) in das Produkt eingearbeitet werden können, die oben genannten Vorteile hydrophober Polyole im Polyurethan bieten. Wie bereits beispielhaft erwähnt, können durch Wahl der Art und Menge der Komponenten i), ii), iii), iv) und v) die Eigenschaften auf verschiedene Anwendungsbereiche eingestellt werden.

### Beispiele

Die folgenden Beispiele illustrieren einige Aspekte der vorliegenden Erfindung; sie sollen keineswegs den Umfang der Erfindung einschränken.

### Beispiel Polyetherester-Polyol A

405,5 g Trimethylolpropan, 3379,4 g Rizinusöl, 495,4 g Phthalsäureanhydrid sowie 1,5 g Imidazol wurden in einen Druckautoklaven vorgelegt und unter Rühren dreimal mit Stickstoff inertisiert. Anschließend wurde die Reaktionsmischung auf 120°C erwärmt und 722,5 g Propylenoxid innerhalb von 120 Minuten zudosiert. Nach beendeter Monomerdosierung und nach Erreichen eines konstanten Reaktordruckes wurden flüchtige Bestandteile sodann im Vakuum für ca. 30 Minuten unter Stickstoff-Strippung abdestilliert und anschließend das Produkt abgelassen. Es wurden so 4855 g eines viskosen, einphasigen Polyetheresterols erhalten. Das Produkt wies folgende analytische Kennzahlen auf:

| | |
|---|---|
| Hydroxywert: 210 mgKOH/g | (DIN 53240) |
| Viskosität (bei 25°C): 2070 mPas | (DIN 51550) |
| Wassergehalt: 0,007 % | (DIN 51777) |
| Säurezahl: <0,01 mg KOH/g | (DIN 53402) |

### Beispiel Polyetherester-Polyol B

449,9 g Trimethylolpropan, 3752,5 g Rizinusöl, 509,9 g Pentasize 68 (C16/C18-Alkenylbernsteinsäureanhydrid der Firma Trigon GmbH) sowie 1,5 g Imidazol wurden in einen Druckautoklaven vorgelegt und unter Rühren dreimal mit Stickstoff inertisiert. Anschließend wurde die Reaktionsmischung auf 120°C erwärmt und 290 g Propylenoxid innerhalb von 60 Minuten zudosiert. Nach beendeter Monomerdosierung und nach Erreichen eines konstanten Reaktordruckes wurden flüchtige Bestandteile sodann im Vakuum für ca. 30 Minuten unter Stickstoff-Strippung abdestilliert und anschließend das Produkt abgelassen. Es wurden so 4951 g eines viskosen, einphasigen Polyetheresterols erhalten. Das Produkt wies folgende analytische Kennzahlen auf:

| | |
|---|---|
| Hydroxywert: 234 mgKOH/g | (DIN 53240) |
| Viskosität (bei 25°C): 1348 mPas | (DIN 51550) |
| Wassergehalt: 0,014 % | (DIN 51777) |
| Säurezahl: <0,054 mg KOH/g | (DIN 53402) |

### Beispiel Polyetherester-Polyol C

449,6 g Trimethylolpropan, 3746,3 g Rizinusöl, 250,0 g Glissopal SA (Poly(isobutylen)bern-steinsaäureanhydrid mit Molekulargweicht 1000 g/mol der Firma BASF SE) sowie 1,5 g Imidazol wurden in einen Druckautoklaven vorgelegt und unter Rühren dreimal mit Stickstoff inertisiert. Anschließend wurde die Reaktionsmischung auf 120°C erwärmt und 799,2 g Propylenoxid innerhalb von 120 Minuten zudosiert. Nach beendeter Monomerdosierung und nach Erreichen eines konstanten Reaktordruckes wurden flüchtige Bestandteile sodann im Vakuum für ca. 30 Minuten unter Stickstoff-Strippung abdestilliert und anschließend das Produkt abgelassen. Es wurden so 4928,4 g eines viskosen, homogenen, leicht trüben Polyetheresterols erhalten. Das Produkt wies folgende analytische Kennzahlen auf:

| | |
|---|---|
| Hydroxywert: 225 mgKOH/g | (DIN 53240) |
| Viskosität (bei 25°C): 1071 mPas | (DIN 51550) |
| Wassergehalt: 0,014 % | (DIN 51777) |
| Säurezahl: 0,01 mg KOH/g | (DIN 53402) |

### Beispiel Polyetherester-Polyol D

449,6 g Trimethylolpropan, 3746,3 g Rizinusöl, 250,1 g Pentasize 8 (C16/C18-Alkenylbernsteinsäureanhydrid der Firma Trigon GmbH) sowie 1,53 g Imidazol und 0,053 g Ti(IV)-tert-butoxid wurden in einen Druckautoklaven vorgelegt und unter Rühren dreimal mit Stickstoff inertisiert. Anschließend wurde die Reaktionsmischung auf 120°C erwärmt und 801,1 g Propylenoxid innerhalb von 120 Minuten zudosiert. Nach beendeter Monomerdosierung und nach Erreichen eines konstanten Reaktordruckes wurden flüchtige Bestandteile sodann im Vakuum für ca. 30 Minuten unter Stickstoff-Strippung abdestilliert und anschließend das Produkt abgelassen. Es wurden so 5140 g eines viskosen, einphasigen Polyetheresterols erhalten. Das Produkt wies folgende analytische Kennzahlen auf:

| | |
|---|---|
| Hydroxywert: 225 mgKOH/g | (DIN 53240) |
| Viskosität (bei 25°C): 1031 mPas | (DIN 51550) |
| Wassergehalt: 0,01 % | (DIN 51777) |
| Säurezahl: 0,01 mg KOH/g | (DIN 53402) |

### Beispiel Polyetherester-Polyol E

1390,2 g Dipropylenglykol, 1751,8 g Phthalsäureanhydrid, 1004,2 g Sojaöl sowie 1,53 g Imidazol wurden in einen Druckautoklaven vorgelegt und unter Rühren dreimal mit Stickstoff inertisiert. Anschließend wurde die Reaktionsmischung auf 120°C erwärmt und 855,8 g Ethylenoxid innerhalb von 120 Minuten zudosiert. Nach beendeter Monomerdosierung und nach Erreichen eines konstanten Reaktordruckes wurden flüchtige Bestandteile sodann im Vakuum für ca. 30 Minuten unter Stickstoff-Strippung abdestilliert und anschließend das Produkt abgelassen. Es wurden 4914 g eines viskosen, einphasigen Polyetheresterols erhalten. Das Produkt wies folgende analytische Kennzahlen auf:

| | |
|---|---|
| Hydroxywert: 241,3 gKOH/g | (DIN 53240) |
| Viskosität (bei 25°C): 1724 mPas | (DIN 51550) |
| Wassergehalt: 0,036 % | (DIN 51777) |
| Säurezahl: 0,01 mg KOH/g | (DIN 53402) |

### Beispiel Polyetherester-Polyol F

1101,0 g Diethylenglykol, 1749,5 g Phthalsäureanhydrid, 1000,2 g Sojaöl sowie 1,5 g Imidazol wurden in einen Druckautoklaven vorgelegt und unter Rühren dreimal mit Stickstoff inertisiert. Anschließend wurde die Reaktionsmischung auf 120°C erwärmt und 1150,6 g Propylenoxid innerhalb von 180 Minuten zudosiert. Nach beendeter Monomerdosierung und nach Erreichen eines konstanten Reaktordruckes wurden flüchtige Bestandteile sodann im Vakuum für ca. 30 Minuten unter Stickstoff-Strippung abdestilliert und anschließend das Produkt abgelassen. Es wurden 4940 g eines viskosen, einphasigen Polyetheresterols erhalten. Das Produkt wies folgende analytische Kennzahlen auf:

| | |
|---|---|
| Hydroxywert: 238 mgKOH/g | (DIN 53240) |
| Viskosität (bei 25°C): 1784 mPas | (DIN 51550) |
| Wassergehalt: 0,016 % | (DIN 51777) |
| Säurezahl: 0,01 mg KOH/g | (DIN 53402) |

### Beispiel Polyetherester-Polyol G

1108,9 g Saccharose, 336,3 g Glycerin, 233,9 g Rizinusöl, 19,06 g Wasser, 100 g Pentasize 68 (C16/C18-Alkenylbernsteinsäureanhydrid der Firma Trigon GmbH) sowie 5,0 g Imidazol wurden in einen Druckautoklaven vorgelegt und unter Rühren dreimal mit Stickstoff inertisiert. Anschließend wurde die Reaktionsmischung auf 130°C erwärmt und 3306,3 g Propylenoxid innerhalb von 7 Stunden zudosiert. Nach beendeter Monomerdosierung und nach Erreichen eines konstanten Reaktordruckes wurden flüchtige Bestandteile sodann im Vakuum für ca. 30 Minuten unter Stickstoff-Strippung abdestilliert und anschließend das Produkt abgelassen. Es wurden so 5014 g eines viskosen, einphasigen Polyetheresterols erhalten. Das Produkt wies folgende analytische Kennzahlen auf:

| | |
|---|---|
| Hydroxywert: 414 mgKOH/g | (DIN 53240) |
| Viskosität (bei 25°C): 14206 mPas | (DIN 51550) |
| Wassergehalt: 0,022 % | (DIN 51777) |
| Säurezahl: 0,04 mg KOH/g | (DIN 53402) |

Anhand dieser Beispiele wird deutlich, dass die erfindungsgemäßen Polyetherester-Polyole durch ein einfaches Verfahren erhältlich sind und das Verfahren zu einheitlichen und homogenen Reaktionsprodukten für einen breiten Anwendungsbereich führt.

Anwendungsbeispiele 1-2: Beschichtungsanwendungen.

| | |
|---|---|
| Antifoam MSA | Entschäumer von der Firma Dow Corning |
| Jeffcat TD-33 A | Triethylendiamin in Dipropylenglykol mit einer OH Zahl: 560 mg KOH/g der Firma Huntsman |
| Zeolitpaste | Molekularsieb in Rizinusöl der Firma Uop |
| Isocyanat | Polymer-MDI (Lupranat^{®}) M20S der BASF SE |

Plattenherstellung für die mechanische Prüfung

Die Reaktionskomponenten und Additive werden bei Raumtemperatur gelagert und verarbeitet. Die Polyol-Komponente (Komponente A, siehe Tabellen) wird angesetzt und für zwei Minuten in einem Speedmixer^{®} vermischt. Anschließend wird diese für mindestens 30Minuten stehen gelassen. Die Menge des zugegebenen Isocyanats wird so berechnet, dass der Isocyanat-Index 115,9 beträgt. Die A Komponente wird mit dem Isocyanat für 60 s im Speedmixer^{®} verrührt. Das Gemisch wird in eine offene Form mit der Abmessung 30 x 20 x 0,2 cm³ ausgegossen und glatt gezogen. Die entstehende Platte bleibt für eine Stunde in der Form, bevor sie herausgenommen wird. Anschließend werden die Platten für zwei Stunden bei 80 °C getempert. Am nächsten Tag werden geeignete Prüfkörper zur Bestimmung der mechanischen Eigenschaften entnommen.

### Quelltest:

Aus der 2 mm-Platte wird ein Stück mit den Maßen 4 x 4 cm² herausgeschnitten und die Masse bestimmt (m1). Anschließend wird die Probe in einen mit Wasser gefüllten 6 L Eimer gelegt, der für 5 Stunden in einem auf 100 °C geheiztem Heizschrank verbleibt. Um das Auftreiben der Proben zu verhindern, werden diese in ein Metallgestell eingespannt. Nachdem die Proben herausgenommen, mit Zellstoff leicht abgetrocknet und auf Raumtemperatur abgekühlt wurden, wird die Masse (m2) bestimmt und daraus der Quellgrad in Prozent berechnet mittels [(m2-m1) / m1) x 100 %)]. Der Messfehler liegt unter 0,1 %. Unterschiede bei den Messwerten von 0,2 % sind signifikant.

Anwendungsbeispiel 1 und 2

| ***Isocyanat Index*** | ***Lupranat M 20 S 115,9*** | | | |
|---|---|---|---|---|
| | | | | |
| Beispiel | | 1 | 2 | |
| Zeolitpaste | Teile | 6,95 | 6,95 | |
| Antifoam MSA | Teile | 0,05 | 0,05 | |
| Jeffcat TD-33 A | Teile | 0,3 | 0,25 | |
| Polyol C | Teile | 93 | | |
| Polyol D | Teile | | 93 | |
| Lupranat M 20 S | MV | 100/60.2 | 100/59.6 | |
| | | | | |
| 2 mm Platte | | | | Bestimmung nach |
| Weiterreißwiderstand | N/mm | 59,2 | 63,5 | DIN ISO 34-1, B (b) |
| Zugfestigkeit | MPa | 25 | 26,4 | DIN EN ISO 527 |
| Reißdehnung | % | 50 | 51 | DIN EN ISO 527 |
| E-Modul | MPa | 467,3 | 384,4 | DIN EN ISO 527 |
| Härte | Shore D | 72 | 71 | DIN 53505 |
| Quellgrad | % an Platte | 0,59 | 0,58 | |

MV beschreibt das Mischverhalten von A zu B Komponente.

Die Anwendungsbeispiele 1 und 2 zeigen, dass mit den erfinderischen Polyolen Polyurethane hergestellt werden können mit Eigenschaften die typisch sind für Beschichtungsanwendungen.

Anwendungsbeispiel 3-4: Hartschaumanwendungen.

| | |
|---|---|
| TCPP | Flammschutzmittel (Tri 2-chlorisopropylphosphat) |
| PEG 600 | Polyethylenglykol mit Mw: 600 g/mol |
| Tegostab B 8443 | Stabilisator der Firma GE Bayer Silicones |
| Texacat ZF 22 | Bis-(2-dimethylaminoethyl)ether in Dipropylenglykol mit einer OH |
| | Zahl: 250 mg KOH/g der Firma Huntsman. |
| Dabco K 2097 | Kaliumacetat basierter Katalysator mit einer OH Zahl: 740 mg |
| | KOH/g der Firma Air Products |
| n-Pentan Leitungswasser | physikalisches Treibmittel der Firma Haltermann |
| Isocyanat | Polymer-MDI (Lupranat®) M20R der BASF SE |

### Schaumherstellung für die mechanische Prüfung

Als Basisschaumsystem wird ein teils Wasser - teils Pentangetriebenes Polyisocyanuratsystem genommen. Ein Kaliumacetat basierter Katalysator wird genommen für die Ausbildung der Isocyanuratgruppen. Die Menge an Pentan und Wasser werden so bemessen, dass der Schaum eine freigeschäumte Dichte von ca 31 kg/m³ hatte; die Menge an Katalysatoren wird so bemessen, dass der Schaum eine Gelzeit von ca. 50 Sekunden hatte. Die Reaktionskomponenten und Additive werden bei Raumtemperatur gelagert und verarbeitet. Die Polyol-Komponente wird angesetzt und im Handansatz mit einem Laborrührer verrührt. Die A-Komponenten werden für eine halbe Stunde stehen gelassen, so dass die meisten Luftblasen in der Mischung entweichen können. Die Menge des zugegebenen Isocyanats wird so berechnet, dass der Isocyanat-Index 225 beträgt. Die A-Komponente wird mit dem Isocyanat für sechs Sekunden im Handansatz mit einem Laborrührer verrührt. Das Gemisch wird mit einer, auf die freigeschäumte Dichte bezogene, zehn prozentige Überpackung in eine 11 L Metallwürfelform gegossen und diese verschlossen. Nach einer halben Stunde wird der Würfelschaum aus der Form genommen. Die Schaumproben werden 3 Tage bei Raumtemperatur gelagert und dann in Prüfkörper für die mechanischen Prüfungen zersägt.

| Beispiel | | 3 | 4 | |
|---|---|---|---|---|
| TCPP | Teile | 13,0 | 13,0 | |
| PEG 600 | Teile | 6,0 | 6,0 | |
| Tegostab B 8443 | Teile | 2,0 | 2,0 | |
| Leitungswasser | Teile | 2,1 | 2,1 | |
| Polyol E | Teile | 78,5 | | |
| Polyol F | Teile | | 78,5 | |
| Texacat ZF 22 | Teile | 2,1 | 2,1 | |
| Dabco K 2097 | Teile | 1,6 | 1,6 | |
| n-Pentan | Teile | 13,5 | 13,5 | |

| | | | | |
|---|---|---|---|---|
| Bechertest | | | | |
| Startzeit | s | 11 | 11 | |
| Fadenziehzeit | s | 45 | 51 | |
| Steigzeit | s | 77 | 81 | |
| Rohdichte | kg/m³ | 31,3 | 32 | |

| | | | | |
|---|---|---|---|---|
| Würfel | | | | Bestimmung nach DIN Norm |
| Raumgewicht Kern | kg/m³ | 30,1 | 32,5 | DIN 53421/DIN EN ISO 604 |
| Geschlossenzelligkeit | % | 90 | 87 | DIN ISO 4590 |
| Druckfestigkeit | N/mm^2 | 0,21 | 0,21 | DIN 53421/DIN EN ISO 604 |
| Biegefestigkeit/-sp. | N/mm² | 0,27 | 0,21 | DIN 53423 |
| Durchbiegung | mm | 7,8 | 9,0 | DIN 53423 |
| Dimensionelle Stabilitätsprüfung (-30°C) | | | | DIN ISO 2796 |
| Längenänderung | % | -0,2 | -0,2 | |
| Breitenänderung | % | -0,1 | 0,1 | |
| Höhenänderung | % | 0,0 | 0,1 | |
| Dimensionelle Stabilitätsprüfung (80°C) | | | | DIN ISO 2796 |
| Längenänderung | % | 0,0 | -0,3 | |
| Breitenänderung | % | 0,3 | -0,9 | |
| Höhenänderung | % | -0,8 | 0 | |

Die Anwendungsbeispiele 3 und 4 zeigen, dass mit den erfinderischen Polyolen Hartschäume hergestellt werden können mit typischen Hartschaumrohdichten und physikalischen Eigenschaften.

## Patentansprüche

1. Verfahren zur Herstellung eines Polyetherester-Polyols, wobei ein Gemisch (A) aus mindestens einer Zerewitinoff-aktiven Verbindung i), mindestens einer Verbindung ii), ausgewählt aus der Gruppe enthaltend zyklische Anhydride von Dicarbonsäuren, mindestens einer Fettsäure iiia) und/ oder derem Ester iiib) sowie optional mindestens einer Verbindung iv), ausgewählt aus der Gruppe enthaltend zyklische Mono- und Diester, mit Hilfe eines nucleophilen und/oder basischen Katalysators mit mindestens einem Alkylenoxid v) zur Reaktion gebracht wird.

2. Verfahren gemäß Anspruch 1, wobei das Gemisch (A) zusammen mit dem nucleophilen und/oder basischen Katalysator vor Zugabe des mindestens einen Alkylenoxids v) im Reaktionsgefäß vorgelegt wird.

3. Verfahren gemäß einem der Ansprüche 1 bis 2, wobei die mindestens eine Zerewitinoff-aktive Verbindung i) ausgewählt ist aus der Gruppe der hydroxy- und/oder aminofunktionellen Verbindungen mit einer Funktionalität im Bereich zwischen 1 und 8.

4. Verfahren gemäß einem der Ansprüche 1 bis 3, wobei das zyklische Anhydrid ii) einer Dicarbonsäure ausgewählt ist aus der Gruppe enthaltend a) Alkenylbernsteinsäureanhydride, b) Phthalsäureanhydrid, c) Maleinsäureanhydrid, d) Bernsteinsäureanhydrid sowie e) Tetrahydrophthalsäureanhydrid, sowie Mischungen daraus.

5. Verfahren gemäß Anspruch 4, wobei das mindestens eine Alkenylbernsteinsäureanhydrid a) ausgewählt ist aus der Gruppe enthaltend C18- und/oder C16-Alkenylbernsteinsäureanhydride, Poly(isobutylen)bernsteinsäureanhydrid und Mischungen hieraus.

6. Verfahren gemäß einem der Ansprüche 1 bis 5, wobei das mindestens eine Alkylenoxid v) ausgewählt ist aus der Gruppe enthaltend Propylenoxid, Ethylenoxid, 1,2-Butylenoxid, 2,3-Butylenoxid, 1,2-Pentenoxid, Octen-1-oxid, Decen-1-oxid, Dodecen-1-oxid, Tetradecen-1-oxid, Hexadecen-1-oxid, Octadecen-1-oxid, Styroloxid, Cyclohexenoxid, Glycidol, Epichlorhydrin und Mischungen hieraus, bevorzugt Propylenoxid, Ethylenoxid und Butylenoxid und Mischungen daraus.

7. Verfahren gemäß einem der Ansprüche 1 bis 6, wobei die Fettsäure iiia) ausgewählt ist aus der Gruppe enthaltend hydroxylgruppenhaltige Fettsäuren, hydroxylgruppenmodifizierte Fettsäuren sowie Fettsäuren, die keine Hydroxylgruppen enthalten, und Mischungen daraus.

8. Verfahren gemäß einem der Ansprüche 1 bis 7, wobei die Fettsäure iiia) ausgewählt ist aus der Gruppe enthaltend gesättigte und ungesättigte Fettsäuren, sowie Mischungen daraus.

9. Verfahren gemäß einem der Ansprüche 1 bis 8, wobei der Fettsäureester iiib) ausgewählt ist aus der Gruppe enthaltend hydroxylgruppenhaltige Fettsäureester, hydroxylgruppenmodifizierte Fettsäureester sowie Fettsäureester, die keine Hydroxylgruppen enthalten, und Mischungen daraus.

10. Verfahren gemäß einem der Ansprüche 1 bis 9, wobei der Fettsäureester iiib) ausgewählt ist aus der Gruppe enthaltend Tran, Talg, Rizinusöl, Sojaöl, Rapsöl, Olivenöl, Sonnenblumenöl, hydroxylgruppenmodifiziertes Sojaöl, hydroxylgruppenmodifiziertes Rapsöl, hydroxylgruppenmodifiziertes Olivenöl, hydroxylgruppenmodifiziertes Sonnenblumenöl und derivatisiertes Rizinusöl, Palmöl, hydroxylgruppenmodifiziertes Palmöl, sowie Mischungen daraus.

11. Verfahren gemäß einem der Ansprüche 1 is 10, wobei die Verbindung iv) nicht vorhanden ist.

12. Verfahren gemäß einem der Ansprüche 1 bis 10, wobei mindestens eine Verbindung iv) vorhanden ist.

13. Verfahren gemäß Anspruch 12, wobei mindestens eine Verbindung iv) ausgewählt ist aus der Gruppe enthaltend γ-Butyrolacton, δ-Valerolacton, ε-Caprolacton, (R,R)-Lactid, (S,S)-Lactid, meso-Lactid, sowie Mischungen daraus.

14. Verfahren gemäß Anspruch 12, wobei die Verbindung iv) ε-Caprolacton ist.

15. Verfahren gemäß einem der Ansprüche 1 bis 14, wobei der nucleophile und/oder basische Katalysator ausgewählt ist aus der Gruppe enthaltend tertiäre Amine.

16. Verfahren gemäß einem der Ansprüche 1 bis 14, wobei der nucleophile und/oder basische Katalysator ausgewählt ist aus der Gruppe enthaltend N-heterocyclische Carbene.

17. Verfahren gemäß einem der Ansprüche 1 bis 15, wobei der basische Katalysator ausgewählt ist aus der Gruppe enthaltend Imidazol sowie Imidazolderivate, bevorzugt Imidazol.

18. Verfahren gemäß einem der Ansprüche 1 bis 17, wobei das Polyetherester-Polyol eine Hydroxyzahl im Bereich zwischen 20 und 1000 mg KOH/g, bevorzugt 100 bis 600 mg KOH/g, aufweist

19. Verfahren gemäß einem der Ansprüche 1 bis 18, wobei das Polyetherester-Polyol zwischen 5% und 90 Gew.% von Fettsäuren iiia) und/oder Fettsäureester iiib) abgeleitete Einheiten enthält.

20. Verfahren gemäß einem der Ansprüche 1 bis 18, wobei das Polyetherester-Polyol zwischen 5% und 80 Gew.% von Verbindung ii) abgeleitete Einheiten enthält.

21. Polyetherester-Polyol, herstellbar nach dem Verfahren eines der Ansprüche 1 bis 20.

22. Verwendung eines Polyetherester-Polyols, herstellbar nach dem Verfahren eines der Ansprüche 1 bis 20, zur Herstellung von geschäumten und/oder kompakten Polyurethanen durch Reaktion mit einem Di- oder Polyisocyanat

23. Verwendung eines Polyetherester-Polyols, herstellbar nach dem Verfahren eines der Ansprüche 1 bis 20, zur Herstellung von Polyisocyanurat-Schäumen

24. Verwendung eines Polyetherester-Polyols, herstellbar nach dem Verfahren eines der Ansprüche 1 bis 20, zur Herstellung von kompakten Polyurethanen aus dem Bereich Beschichtungen oder Klebstoffe.
